# EUROPEAN PATENT SPECIFICATION

(11) **EP 2 999 925 B1**
(45) Date of publication and mention of the grant of the patent: **24.07.2019**
(21) Application number: 14800843.6
(22) Date of filing: 05.03.2014
(51) Int. Cl.: F23G 7/06, F23J 15/00, B01D 53/22, F23G 5/46, F23G 5/50, F23N 5/00

(54) **METHOD FOR THE TREATMENT OF GAS**
VERFAHREN ZUR GASBEARBEITUNG
PROCÉDÉ POUR LE TRAITEMENT DE GAZ

(30) Priority: 20.05.2013 AU 2013901793
(43) Date of publication of application: 30.03.2016
(73) Proprietor: Sustainable Enhanced Energy Pty Ltd, Robina, QLD 4226 (AU)
(72) Inventor: FISHER, William, Robina, QLD 4226 (AU)
(74) Representative: Patentanwälte Bressel und Partner mbB
(86) International application number: PCT/AU2014/000201
(87) International publication number: WO 2014/186817

(56) References cited:
- US-A- 4 364 915
- US-A1- 2007 006 565
- US-A1- 2007 130 957
- US-A1- 2009 252 659
- US-A1- 2011 290 163
- US-A1- 2012 055 385

## Description

### TECHNICAL FIELD

The present invention relates to a method for the treatment of gas. In particular, the present invention relates to a method for the treatment of flue gas, such as flue gas from a coal fired boiler, such as those used in electricity generation plants.

### BACKGROUND ART

During the combustion of fossil fuels (such as in coal-fired power stations) gaseous waste products including carbon dioxide, carbon monoxide and nitrous oxides are produced. Not only do these waste products generate air pollution, but they are also known to be greenhouse gases that contribute to climate change.

In order to reduce the pollution generated by coal-fired power stations, some attempts have been made to capture and/or treat power station flue gases. However, these techniques typically result in a corresponding reduction in the output of generating electricity available from a power station to the electricity grid.

Thus, there would be an advantage if it were possible to provide a method for the treatment of flue gases (and/or the sequestration of carbon dioxide) from a coal-fired power station that reduced the output of polluting gases without producing a corresponding reduction in generated electricity output.

US 2007/0006565 A1 discloses a gas treatment method according to the preamble of claim 1.

### SUMMARY OF INVENTION

The present invention is directed to a method for the treatment of gas, as desribed in claim 1, which may at least partially overcome at least one of the abovementioned disadvantages or provide the consumer with a useful or commercial choice. The attached claims define the scope of protection.

With the foregoing in view, the present invention in one form, resides broadly in a method for the treatment of gas generated by the combustion of fossil fuel in a first combustion chamber, the method comprising the steps of transferring the gas to a second combustion chamber, combusting the gas in the second combustion chamber in the presence of oxygen and a fuel source to generate waste gas and treating the waste gas to produce a concentrated carbon dioxide stream.

Gas may be generated by the combustion of any suitable fossil fuel, including natural gas, oil (and derivatives thereof) and so on. However, according to the claims, the fossil fuel comprises coal. Any suitable grade of coal may be used, such as lignite (brown coal), sub-bituminous coal, bituminous coal, anthracite or a combination thereof

The first combustion chamber may be of any suitable form. It is envisaged, however, that the first combustion chamber may be located in a coal-fired power station. Thus, in this embodiment of the invention, the first combustion chamber comprises a coal combustion furnace. It will be understood that the size, configuration, and operating conditions within the first combustion chamber will be dependent on a large number of factors, including the type of coal to be combusted, the electricity output of the power station and so on. As a result, the exact specifications of the first combustion chamber arc not critical to the invention.

Having said that, it is envisaged that the heat generated by the combustion of fossil fuel in the first combustion chamber will be used to vaporise water in a boiler associated with the first combustion chamber to generate steam. The steam is then used to drive turbines to generate electricity. A skilled addressee will understand this configuration, and no additional discussion of this is required.

It will be understood that gas generated by the combustion of fossil fuel in the first combustion chamber may comprise a number of constituent gases, such as. but not limited to, carbon dioxide, carbon monoxide and nitrous oxides. In addition, the gas may include particulate matter, such as oxides of silicon, calcium, iron and aluminium (collectively referred to as "fly ash"). It will also be understood that at least a portion of the gas may comprise hydrocarbon gas (although it is also envisaged that a portion of the particulate matter may comprise unburnt hydrocarbons). Typically, depending on the type of furnace and coal, the gas may comprise between 3% and 10% v/v of hydrocarbon gas. In conventional coal-fired power stations, gas generated through the combustion of coal may ultimately be released to the atmosphere as flue gases, meaning that the hydrocarbons in the flue gas arc also lost. Not only does this generate pollution, but it also represents a reduction in the efficiency of the power station through the loss of the calorific value of the hydrocarbons released to the atmosphere in the flue gas. While not wishing to be bound by theory, it is estimated that 10% or more of the total energy of the fossil fuel burning process may be lost through the loss of unburnt hydrocarbons in flue gas.

In the present invention, flue gas from the first combustion chamber is not released to the atmosphere. Instead, the gas generated by the combustion of fossil fuel in the first combustion chamber is transferred to a second combustion chamber for further combustion. The gas may be transferred directly from the first combustion chamber to the second combustion chamber using any suitable technique. In a preferred embodiment of the invention, however, the gas may be treated prior to entering the second combustion chamber.

In some embodiments of the invention, the flue gas leaving the first combustion chamber may be analysed to determine the constituents of the flue gas. Thus, in this embodiment, one or more sensors may be provided that analyse the flue gas in order to determine one or more properties of the flue gas, such as, but not limited to, the type of constituents gases within the flue gas, the relative proportions of each constituent gas within the flue gas, and so on.

Preferably, the one or more sensors are located such that flue gas exiting the first combustion chamber is directed past the one or more sensors. Information generated by the one or more sensors may be analysed using any suitable technique, and at any suitable time. However, in a preferred embodiment of the invention, the information generated by the one or more sensors is transferred in real time to an information collection system. Any suitable information collection system may be used, such as one or more computers, DCS, Scada, expert system or the like, or any suitable combination thereof.

In a preferred embodiment, information received by the information collection system from the one or more sensors may be analysed. For instance, the information may be analysed by a human operator, or may be electronically analysed. Preferably, the information is analysed electronically in real time.

It is envisaged that the information received from the one or more sensors may be analysed by comparing the information against existing data in the information collection system. The existing data may be data collected previously from the one or more sensors, or may be data programmed into the information collection system, or may be a combination thereof.

Once the information received from the one or more sensors has been analysed, output data may be generated. The output data may be in any suitable form, and may be issued to a human operator or may be transferred electronically to a control unit associated with a second combustion chamber. Preferably, the output data is transferred electronically in real time to a control unit associated with a second combustion chamber. In this way, the combustion conditions within the second combustion chamber (i.e. the relative proportions of fuel, oxygen and flue gas entering the second combustion chamber) may be controlled so as to produce a desirable combustion environment. For instance, the relative proportions of fuel, oxygen and flue gas may be controlled so as to maximise heat generated in the second combustion chamber, minimise the generation of noxious and/or greenhouse gases, and so on.

In a preferred embodiment of the invention, the output data may be used to adjust the position of one or more valves (for instance, valves between an oxygen tank and the second combustion chamber, or a hydrocarbon fuel tank and the second combustion chamber) in order to control the flowrate and/or volume of oxygen or hydrocarbon fuel entering the second combustion chamber. It is envisaged that this may, in turn, influence the composition of the waste gas that is produced as a product of the second combustion chamber.

By adjusting the position of the one or more valves in response to real time information collected regarding the composition of the flue gas, the efficiency of the combustion in the second combustion chamber may be controlled and maximised with minimal lag between the collection of the information and the adjustment of the material introduced into the second combustion chamber.

The gas may be treated using any suitable technique, or combination of techniques. For instance, the gas may be filtered to remove at least a portion of the particulate matter. Any suitable filtration technique may be used, including filter bags, electrostatic precipitators, wet scrubbers, dry sorbent injectors, spray dryer absorbers, or any suitable combination thereof. Any suitable number of stages of filtration may be used in order to reduce the quantity of particulate matter in the flue gas (in particular, the quantity of fly ash in the flue gas) to a desired level. In a preferred embodiment of the invention, at least about 80% of particulate matter in the gas may be removed during filtration. More preferably, at least about 90% of particulate matter in the gas may be removed during filtration. Still more preferably, at least about 95% of particulate matter in the gas may be removed during filtration. Most preferably, at least about 99.5% of particulate matter may be removed during filtration.

In some embodiments of the invention, the flue gas may be compressed prior to entering the second combustion chamber. Compression of the flue gas may be carried out after the filtration of the gas, or may be performed directly on flue gas exiting the first combustion chamber (and a filtration process may or may not be carried out following the compression of the gas). Compression of the flue gas may be achieved using any suitable compressor, such as positive displacement compressors (such as rotary or reciprocating compressors), dynamic compressors (such as centrifugal or axial compressors) or a combination thereof. It is preferred that the flue gas is compressed before entering the second combustion chamber so as to reduce its volume: a reduced volume of flue gas means that the size of the second combustion chamber may be smaller than if the flue gas was not compressed.

Preferably, one or more storage vessels for the storage of flue gas may be provided between the first combustion chamber and the second combustion chamber. In this way, a quantity of flue gas may be stored. The storage of a quantity of flue gas assists in achieving the smooth operation of the second combustion chamber, in that a consistent flow of flue gas to the second combustion chamber may be achieved.

The one or more storage vessels may be of any suitable form. Preferably, however, the one or more storage vessels comprise storage tanks, and, in a most preferred embodiment of the invention, the storage vessels comprise storage tanks capable of storing a compressed gas.

It will be understood that the number and volume of storage vessels required will be heavily dependent on the quantity of flue gas produced by the first combustion chamber, the degree of compression of the gas, the size of the second combustion chamber and so on. However, it is envisaged that the storage capacity of the one or more storage vessels will be sufficient to ensure that a consistent flow of gas to the second combustion chamber is achieved regardless of variation in the production of flue gas in the first combustion chamber. In this way, the second combustion chamber may be operated continuously regardless of the status of the first combustion chamber.

The transfer of flue gas between the first and second combustion chambers may be achieved using any suitable technique. For instance, the flue gas may be transferred using one or more pumps, blowers or the like, or any suitable combination thereof. Alternatively, the flue gas (being lighter than air) may simply be allowed to rise along at least a portion of the distance between the first combustion chamber and the second combustion chamber.

The second combustion chamber may be of any suitable form. In a preferred embodiment of the invention, however, the second combustion chamber comprises a furnace. The size and configuration of the second combustion chamber will be dependent on a number of factors, including the quantity of flue gas to be treated, the hydrocarbon content of the flue gas and so on, and it will be understood that the exact size and configuration of the second combustion chamber is not critical to the invention.

As previously mentioned, the flue gas is combusted in the second combustion chamber in the presence of oxygen and a fuel source. Any suitable fuel source may be used, although in a preferred embodiment of the invention, the fuel source comprises a source of hydrocarbons. In some embodiments of the invention, the fuel source may comprise coal seam gas, natural gas (including liquid natural gas or compressed natural gas), shale oil gas or methane, or any suitable combination thereof.

Preferably, if a source is readily available, coal seam gas is used as the fuel source. The reason of this is that a portion of the heat generated from the combustion of coal seam gas is derived from the oxidation of hydrogen to form water. Thus, the use of coal seam gas generates less carbon dioxide than other fuels. Preferably, the fuel source used in the second combustion chamber generates less carbon dioxide per gram of fuel burnt, when compared to the fuel used in the first combustion chamber.

The fuel source may be added to the second combustion chamber using any suitable technique, including through one or more lances, tuyeres or the like, or a combination thereof. Alternatively, the fuel may be added to the second combustion chamber using one or more rings.

Oxygen may be added to the second combustion furnace in any suitable form. For instance, any suitable gas in which oxygen is present (such as ambient air or compressed air) may be added to the furnace. However, the use of air as a source of oxygen may not be suitable due to the high proportion of nitrogen in air. Thus, in some embodiments of the invention, the source of oxygen may comprise gas having a relatively high oxygen content, such as purified oxygen gas.

It will be understood that the relative quantities of oxygen and fuel added to the second combustion chamber will vary depending on the quantity of flue gas entering the second combustion chamber, the composition of the flue gas, the degree of compression of the flue gas and so on. However, it is envisaged that the relative quantities of oxygen and fuel added to the second combustion chamber will be varied in order to maintain a substantially constant operating temperature within the second combustion chamber.

In an alternative embodiment of the invention, flue gas may be mixed with oxygen and a fuel source prior to the introduction of the flue gas into the second combustion chamber. It is envisaged that this arrangement may result in a high degree of control over the composition and/or flowrate of the gaseous mixture entering the second combustion chamber.

Oxygen and fuel may be supplied to the second combustion chamber from tanks or similar vessels located at or near the power station, and these vessels may be periodically resupplied. Alternatively, a plant capable of producing pure oxygen may be located at or near the power station in order to supply oxygen directly to the second combustion chamber. Further, the fuel may be supplied directly to the second combustion chamber from a source of the fuel, such as a coal seam gas well or the like.

Preferably, the operating temperature within the second combustion chamber is higher than the operating temperature within the first combustion chamber. It is envisaged that the higher temperature in the second combustion chamber may result in the combustion of unburnt hydrocarbons within the flue gas. In addition, it is envisaged that other pollutants within the flue gas (such as NOx, carbon monoxide etc) may also be combusted in the second combustion chamber, thereby reducing the quantities of greenhouse gas emitted t!·om the power station.

Any suitable operating temperature within the second combustion chamber may be used. However, according to the claims, the operating temperature in the second combustion vessel is between 1200°C and 2400°C. More preferably, the operating temperature in the second combustion vessel may be between approximately 1500°C and approximately 2000°C. Most preferably. the operating temperature in the second combustion vessel may be approximately 1800°C.

In a preferred embodiment of the invention, at least a portion of the heat generated by the combustion of the flue gas in the second combustion chamber may be used to drive one or more electricity generation devices. For instance, the heat generated by the combustion of the flue gas may be used to drive one or more turbines (for instance. through the generation of steam in a boiler), wherein the one or more turbines may be associated with one or more generators such that actuation of the one or more turbines results in the generation of electricity by the one or more generators. The electricity generated by the actuation of the one or more turbines may be used in any suitable manner, although it is envisaged that, in a preferred embodiment of the invention, the electricity generated by the actuation of the one or more turbines may be fed into an electrical grid for domestic, commercial and/or industrial use. Alternatively, at least a portion of the electricity generated from the second combustion chamber may be used to drive one or more of the pieces of equipment required to operate the method of the present invention.

In some embodiments of the invention, at least a portion of the heat generated by the combustion of the flue gas in the second combustion chamber may be directed to the first combustion chamber. In this embodiment it is envisaged that the heat generated by the combustion of fossil fuel in the first combustion chamber may be used to generate steam in the boiler associated with the first combustion chamber, the steam in tum driving one or more turbines so as generate electricity.

There are numerous benefits associated with directing at least a portion of the heat generated by the combustion of the flue gas in the second combustion chamber to the first combustion chamber. Not least amongst these is the fact that the supply of additional heat to the first combustion chamber means that less fossil fuel needs to be combusted to achieve the desired operating conditions within the first combustion chamber. In addition, a higher energy efficiency of the process is achieved due to the combustion of hydrocarbons in the second combustion chamber that would otherwise have been lost in the flue gas. Further, the combination of the higher energy efficiency of the process as well as the reduced quantity of fossil fuel used in the first combustion chamber results in a reduction in the quantity of greenhouse gases (such as carbon dioxide) generated per unit of electricity produced.

As an alternative to supplying additional heat generated in the second combustion chamber to the first combustion chamber to reduce fossil fuel usage, it is envisaged that one or more additional generators may be provided, and heat generated in the second combustion chamber may be used to drive the one or more additional generators. In this way, the amount of electricity generated may be increased without increasing the quantity of fossil fuels used in the first combustion chamber.

According to the claims, the second combustion chamber comprises one or more turbo generators. It is envisaged that the flue gas is directed to the one or more turbo generators and combusted in the presence of oxygen and a fuel source. The electricity generated may be fed to a gathering system prior to being fed to an electricity grid.

As previously disclosed, waste gas is generated by the combustion of the flue gas in the second combustion chamber. It is envisaged that, due to the particulate removal processes to which the flue gas is desirably subjected after leaving the first combustion chamber that the waste gas contains substantially no particulate matter. Notwithstanding, in some embodiments of the invention, the waste gas exiting the second combustion chamber may undergo a separation process to remove any residual particulate matter and/or carbon monoxide (if present). The waste gas may be treated using any suitable technique, or combination of techniques. For instance, the waste gas may be filtered using filter bags, electrostatic precipitators, wet scrubbers, dry sorbent injectors, spray dryer absorbers, lime beds or any suitable combination thereof. Preferably, any remaining residual heat in the waste gas may be directed to one or more heat exchangers prior to the filtration of the waste gas. Any suitable number of stages of filtration may be used in order to reduce the quantity of particulate matter and/or undesirable gases (such as carbon monoxide) in the waste gas to a desired level. In particular embodiments or !he invention, the waste gas may be subject to sufficient filtration so as to reduce the content of particulate matter and/or undesirable gases in the waste gas to levels where the waste gas may be released to the atmosphere. For instance, it may be harmful (or even illegal in some jurisdictions) to release waste gas to the atmosphere that contains more than a particular level of undesirable gases such as carbon monoxide. Thus, in these situations, the level of the undesirable gas or gases may reduced to a level that is acceptable (tor instance, less than about 0.5% for carbon monoxide).

In a preferred embodiment of the invention, the waste gas may he cooled after exiting the second combustion chamber. The waste gas may be cooled using any suitable technique. For instance, cooling of the waste gas may be achieved during a filtration process (such as wet scrubbing). Alternatively, the waste gas may pass through one or more cooling devices (such as heat exchangers or the like) so as to cool the waste gas.

The heat recovered from the waste gas may be used for any suitable purpose. For instance, in some embodiments of the invention, the heat recovered from the waste gas may be used for drying coal to be used in the first combustion chamber.

The waste gas undergoes a separation process so as to separate certain gaseous components of the waste gas from other gaseous components. In some embodiments of the invention, the separation process may be adapted to separate the polluting components of the waste gas from the non-polluting components. For instance, in a particular embodiment of the invention, the separation process may be used to separate the greenhouse gas component of the waste gas from the non-greenhouse gas component. In a most preferred embodiment of the invention, the separation process may be adapted to separate carbon dioxide from the other gaseous components of the waste gas.

Any suitable separation technique may be used to achieve the desired separation of the components of the waste gas. For instance, the waste gas could be cooled to initiate a phase change in the gaseous components, thereby allowing the components to be separate. Alternatively, one or more filters may be used to separate the components of the waste gas.

According to the claims, one or more membrane filters (selectively gas permeable membranes) are used to separate the components of the waste gas. Any suitable membrane filter may be used, such as a porous membrane, a nonporous polymeric membrane or a mixed matrix membrane.

Preferably, the membrane filters of the present invention comprise nonporous polymeric membranes, and in some embodiments the membrane filters may be fabricated from woven fibreglass filters, polytetrafluoroethylene, poly(trimethyl silyl propyne), poly(4-methyl-1-pentyne), silicone, poly(2,6-dimethyl-1,4-phenylene oxide), polysulfone, polyetherimides, polyimides or any suitable combination thereof. It will be understood that, when membrane filters are used to separate the gaseous components of the waste gas, that it may be advantageous to cool the waste gas prior to separation in order to protect the membrane filters from damage cause by high temperature gas.

It is envisaged that, in a nonporous polymeric membrane, the gases are separated due to their different solubility and diffusivity in the polymers. The permeability of nonporous polymeric membranes is generally affected by a combination of the solubility of the gas in the membrane polymer and the diffusivity of the gas in the polymer. Typically, gas permeation in nonporous polymeric membranes occurs as gases having relatively small molecules diffuse through the membrane among polymer chains according to the formation of local gaps by thermal motion of polymer segments. It will be understood that the diffusivity of a gas depends mainly on its molecular size, allowing the membrane to be selectively permeable for different gases.

Suitably, the waste gas may be pressurised prior to being brought into contact with the one or more membrane filters. Pressurisation of the waste gas may be achieved using any suitable technique, and the waste gas may be pressurised to any suitable pressure. Preferably, however, the waste gas is pressurised sufficiently such that the pressurisation of the waste gas provides a sufficient driving force to drive the waste gas through the one or more membrane filters.

Preferably, as the waste gas contacts a membrane filter, a first portion of the waste gas passes through the membrane filter (a first concentrate stream), while a second portion of the waste gas is unable to pass through the membrane filter (a first reject stream). The first concentrate stream could be either rich in greenhouse gases or poor in greenhouse gases, depending on the type of membrane filter used. Preferably, however, the first concentrate stream is a greenhouse gas (and, in particular, carbon dioxide) rich stream. Thus, the membrane filter functions as a selectively gas permeable membrane.

It is envisaged that any suitable number of membrane filters could be used. In addition, any suitable number of stages of filtration could be used. For instance, in some embodiments of the invention it may be desired to produce a conccntratcd carbon dioxide stream for subsequent use. In these embodiments of the invention, it may be desired to pass the waste gas through a plurality of stages of filtration until the concentration of carbon dioxide in the carbon dioxide stream reaches a desired level.

More specifically, it is envisaged that the waste gas may be brought into contact with a first membrane filter, and the portion of the waste gas passing through the first membrane filter forms a first concentrate stream containing a relatively high concentration of carbon dioxide, while the portion of the waste gas that is unable to pass through the first membrane filter forms a first reject stream that contains a relatively low concentration of carbon dioxide.

Preferably, the first concentrate stream may be brought into contact with a second membrane filter, and the portion of the first concentrate stream passing through the second membrane filter forms a second concentrate stream containing a higher concentration of carbon dioxide than the first concentrate stream. The portion of the first concentrate stream that is unable to pass through the second membrane filter forms a second reject stream that contains a relatively low concentration of carbon dioxide.

It will be understood that the term "first membrane filter" and "second membrane filter" may refer to a single membrane filter, or a plurality of membrane filters together forming a single stage of separation.

This separation process may be repeated through as many separation stages as required until the concentration of carbon dioxide in the final concentrate stream reaches a desired level. Any suitable level of carbon dioxide concentration may be desired, although in some embodiments of the invention, the desired level of carbon dioxide in the final concentrate stream may be greater than 75% v/v. More preferably, the desired level of carbon dioxide in the final concentrate stream may be greater than 85% v/v. Most preferably, the desired level of carbon dioxide in the final concentrate stream may be greater than 90% v/v.

In some embodiments of the invention, a titanium silicate molecular type sieve arrangement may be used instead of (or in conjunction with) a membrane filter. It is envisaged that the molecular sieve type arrangement may allow certain gases (such as nitrogen) to pass through a fixed bed of absorbent material at elevated pressure (for instance, between about 6.8 atm and about 27.2 atm). These gases may then be removed from the absorbent material and, if non-polluting, may be released to the atmosphere. Removal of the gases may be achieved using any suitable technique, such as, but not limited to, using a low pressure pump (such as a vacuum pump).

The reject streams may be used for any suitable purpose. For instance, the reject streams may undergo a separation process so that the component gases of the reject streams may be used or collected for sale and so on. Alternatively, it is envisaged that the major component of the reject streams will be nitrogen, meaning that the reject streams can be discharged to the atmosphere with negligible or no environmental impact.

The final concentrate stream may be used for any suitable purpose. However, it is envisaged that the final concentrate stream will not be discharged to the atmosphere due to the high carbon dioxide content. Instead, it is preferred that the final concentrate stream is used in a manner in which the carbon is prevented from entering the atmosphere. For instance, the final concentrate stream may be collected in either gas or liquid form (with or without further purification) for sale and/or use in applications in which carbon dioxide is required.

In other embodiments of the invention, the final concentrate stream may be used in the production of methane and/or methanol. In this embodiment, methane/methanol produced using the final concentrate stream may be used in the second combustion chamber, thereby reducing the cost of hydrocarbon fuel source used in the second combustion chamber.

Alternatively, the final concentrate stream may be treated in such a manner that the carbon in the stream is sequestered so that it is prevented from entering the atmosphere. Any suitable sequestration method may be used. For instance, the final concentrate stream may be sequestered in synthetic rock or aggregate. In this embodiment, it is envisaged that the carbon dioxide may be sequestered in the form of divalent cation carbonates.

In other embodiments, the carbon dioxide may be sequestered in building materials (including bricks, tiles, cement boards, conduit, beams, basins, columns, drywalls, fibre cement siding, slabs, acoustic barriers, insulation or the like, or any suitable combination thereof). It is envisaged that, in this embodiment, the carbon dioxide may be sequestered in the form of divalent cations.

In another aspect, the invention resides broadly in a method for the treatment of flue gas generated by the combustion of coal in a coal-fired power station, the method comprising the steps of combusting coal in a first furnace, collecting flue gas exiting the first furnace, compressing the flue gas to form a compressed gas, transferring the compressed gas to a second furnace, combusting the compressed gas in the second furnace in the presence of oxygen and a fuel source to generate waste gas and passing the waste gas through one or more separation membranes to produce a concentrated carbon dioxide stream.

Any of the features described herein can be combined in any combination with any one or more of the other features described herein within the scope of the invention.

The reference to any prior art in this specification is not, and should not be taken as an acknowledgement or any form of suggestion that the prior art forms part of the common general knowledge.

### DETAILED DESCRIPTION OF THE INVENTION

The nature of the present invention may be more clearly understood from the following preferred but non-limiting examples.

Two samples of flue gas were obtained from a Queensland black coal fired power station. The samples of flue gas were then analysed to determine their composition. The composition of the flue gas samples is set out in Table 1 below.

**Table 1: Flue Gas Sample Compositions**

| **Parameter** | **Sample 1** | **Sample 2** |
|---|---|---|
| Gas temperature (°C) | 138 | 136 |
| Gas velocity (m/s) | 17.1 | 16.9 |
| Gas flow rate (m³/s) | 83.9 | 83.0 |
| Water Vapour (% v/v) | 8.51 | 8.14 |
| Gas flow rate at STP, dry (Nm³/s) | 51.0 | 50.9 |
| Concentration of oxygen, dry (% v/v) | 8.49 | 8.67 |
| Concentration of carbon dioxide, dry (% v/v) | 11.9 | 11.7 |
| Concentration of nitrous oxide, dry (ppm) | 4.4 | 3.8 |
| Concentration of nitrogen, dry (% v/v) (Average of both samples) | 79.62 | 79.62 |
| Concentration of solid particles, dry (mg/Nm³) | 8.56 | 10.2 |

An average of Sample 1 and Sample 2 was calculated so as to produce an average flue gas composition. Calculations were then performed to determine the quantity of oxygen required for the complete combustion of all flammable gases in the average flue gas composition. Ratios of the total oxygen required (comprising the sum of added oxygen and oxygen present in the average flue gas composition) to fuel addition (in the form of methane) under various conditions of combustion is set out in Table 2 below. It should be noted that for complete combustion of all flammable gases, some excess oxygen is required. Therefore, the calculations used to produce the data in Table 2 were based on maintaining a minimum oxygen concentration of 2% (dry v/v) in the waste gas.

**Table 2: Ratio of Oxygen to Fuel Under Various Combustion Conditions**

| **Process & Temperature** | **CH₄ + pure O₂ - 1200°C + Flue in** | **CH₄ + pure O₂ - 1524°C + Flue in** | **CH₄ + pure O₂ - 1524°C + flue in with heat exchange** | **CH₄ + pure O₂ - 1800°C + Flue in** |
|---|---|---|---|---|
| Input gases: fuel (w/w) | 39.28 | 29.42 | 35.99 | 24.04 |
| Input gases:fuel (v/v) | 21.49 | 16.05 | 19.68 | 13.08 |

The same combustion conditions as listed in Table 2 were then used to calculate the useable thermal energy and thermal efficiencies of the secondary combustion of the average flue gas composition. These results are set out in Table 3 below:

**Table 3: Useable thermal energy and thermal efficiencies of the secondary combustion of the average flue gas composition**

| **Process & Temperature** | **CH₄ + pure O₂ - 1200°C + Flue in** | **CH₄ + pure O₂ - 1524°C + Flue in** | **CH₄ + pure O₂ - 1524°C + flue in with heat exchange** | **CH₄ + pure O₂ -1800°C + Flue in** |
|---|---|---|---|---|
| Combustion Temp (°C) | 1200 | 1524 | 1524 | 1800 |
| Flue Discharge Temp (°C) | 137 | 137 | 254 | 137 |
| Useable Thermal Energy (MW) | 93.61 | 129.54 | 119.11 | 164.17 |
| Thermal Efficiency (%) | 82.47 | 84.25 | 78.00 | 85.26 |

Also calculated were the chemical compositions of the waste gases following secondary combustion under the various combustion conditions set out in Tables 2 and 3. The results of these calculations are provided below in Table 4.

**Table 4: Chemical compositions of waste gases following secondary combustion under various combustion conditions**

| **Process & Temperature** | **Average Flue Gas Composition** | **CH₄+ pure O₂ - 1200°C + Flue in** | **CH₄ + pure O₂ - 1524°C + Flue in** | **CH₄ + pure O₂ - 1524°C + flue in with heat exchange** | **CH₄ + pure O₂ - 1800°C + Flue in** |
|---|---|---|---|---|---|
| Combustion Temp (°C) | 137 | 1200 | 1524 | 1524 | 1800 |
| Water Vapour % of total flue gases (v/v) | 8.33 | 16.56 | 19.03 | 17.24 | 21.17 |
| Oxygen % of total dry flue gases (v/v) | 8.58 | 2.18 | 2.13 | 2.18 | 2.17 |
| Carbon dioxide % of total dry flue gases (v/v) | 11.8 | 17.26 | 18.94 | 17.72 | 20.48 |
| Nitrogen % of total dry flue gases (v/v) | 79.62 | 80.56 | 78.93 | 80.11 | 77.35 |

Finally, the specific carbon dioxide produced per unit of useable thermal energy produced, as well as the pure oxygen required per unit of useable thermal energy produced were calculated. These results are set out in Table 5 below.

**Table 5: Carbon dioxide produced and pure oxygen required per unit of useable thermal energy**

| **Process & Temperature** | **CH₄ + pure O₂ - 1200°C + Flue in** | **CH₄ + pure O₂ - 1524°C + Flue in** | **CH₄ + pure O₂ - 1524°C + flue in with heat exchange** | **CH₄ + pure O₂ - 1800°C + Flue in** |
|---|---|---|---|---|
| Combustion Temp (°C) | 1200 | 1524 | 1524 | 1800 |
| Secondary combustion carbon dioxide production per unit of useable thermal energy (kg/GJ) | 55.04 | 55.16 | 50.73 | 55.24 |
| Combined primary and secondary combustion carbon dioxide production per unit of useable thermal energy (kg/GJ) | 81.94 | 77.96 | 79.92 | 75.13 |
| Coal power station primary combustion carbon dioxide production per unit of useable thermal energy (kg/GJ) | 109.07 | 109.07 | 109.07 | 109.07 |
| Pure oxygen addition per unit of useable thermal energy (kg/GJ) | 25.61 | 40.82 | 31.85 | 49.64 |

The results presented in Table 4 illustrate that at all combustion conditions, the method of the present invention yields a waste gas stream having significantly higher concentrations of carbon dioxide than the flue gas. Furthermore, the method displays an increase in carbon dioxide concentrations in the waste gas with increasing temperature.

It may also be seen in Table 5 that the carbon dioxide produced per unit of useable thermal energy in the secondary combustion (when using methane as a fuel) is about half of that for the burning of coal in a power station. In addition, the combined carbon dioxide produced per unit of useable thermal energy for the primary and secondary combustion is less than that for the burning of coal in a power station. This clearly demonstrates that the method of the present invention results in a reduction of carbon dioxide per unit of useable thermal energy than a single combustion stage coal fired power station.

### BRIEF DESCRIPTION OF DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:

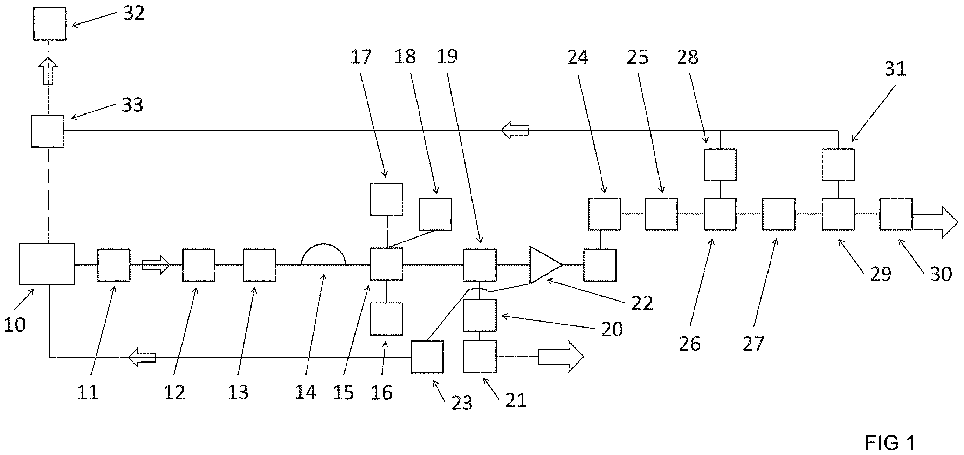

Figure 1 illustrates a schematic diagram of a method for the treatment of gas according to an embodiment of the present invention.

### DESCRIPTION OF EMBODIMENTS

In Figure 1 there is illustrated a schematic diagram of a method for the treatment of gas according to an embodiment of the present invention. The method includes a coal-fired power station including a first combustion vessel 10 in the form of a coal-burning furnace. Flue gas leaving the furnace 10 is directed to one or more sensors 11 for sensing the type and quantity of constituent gases in the flue gas. Information gathered by the one or more sensors 11 is fed to an information collection system (not shown), such as a computer, DCS, Scada or the like. Information collection is carried out in real time as the flue gas leaves the furnace 10.

After this, the flue gases are directed to a filtration system 12 in order to remove substantially all of the particulate matter from the gas. The particulate matter is collected and disposed of, although the method of disposal is dependent on the composition of the particulate matter.

Once the particulate matter has been removed from the gas, the flue gas is compressed in a compressor 13, before being directed to a storage tank 14.

When required, the compressed flue gas is transferred from the storage tank 14 to a second combustion chamber 15 in the form of a second furnace. The flue gas, and in particular the hydrocarbon content of the compressed flue gas, is combusted in the second combustion chamber 15 in the presence of oxygen supplied from an oxygen tank 16 and a hydrocarbon fuel supplied from a fuel tank 17.

The second combustion chamber 15 is also provided with an electrical ignition system 18 to assist in the ignition of the mixture in the chamber 15. The electrical ignition system 18 may be operated continuously, or may be operated only when required (such as when restarting the furnace 15 after a shutdown). In embodiments of the invention in which the electrical ignition system 18 is operated continuously, the electrical ignition system 18 may be operated with or without a pulsing function.

The information collection system (not shown) analyses the information collected by the one or more sensors II and compares it to programmed information to produce analysed data. The analysed data is then relayed to the electrical ignition system 18 which in turn controls the relative quantities of hydrocarbon fuel and oxygen released from the fuel tank 17 and oxygen tank 16, respectively, into the second combustion chamber 15.

Thus, by controlling the quantities of hydrocarbon fuel and oxygen fed to the second combustion chamber 15 based on the composition of the flue gas, the information collection system (not shown) is able to generate a mixture within the second combustion chamber 15 that is not only efficient in terms of generating a large amount of heat from the secondary combustion chamber 15, but will also minimise the generation of noxious or greenhouse gases.

Heat 19 generated by the combustion in the furnace 15 is used to create electricity in an electrical generator 20 (which may comprise a turbine and generator, or any suitable alternative), and the generated electricity is output to an electrical grid 21.

In the embodiment of the invention shown in Figure 1, an efficiency control valve 22 directs a portion 23 of the heat generated in the second furnace 15 back to the first furnace 10, where it is used to generate steam in a boiler (not shown), the steam being used to drive a turbine (not shown) and generate electricity. By directing a portion 23 of the heat generated in the second furnace 15 back to the first furnace 10, the amount of coal required to be combusted in the first furnace 10 in order to achieve the necessary heat to operate the boiler (not shown) is reduced.

Waste gas 24 generated in the second combustion chamber 15 is directed to a scrubber (particularly a wet scrubber) or particle filter 25 to remove any residual particulate matter in the waste gas 24. In addition, passing the waste gas 24 though the scrubber or particle filter 25 acts to reduce the temperature of the waste gas 24.

The waste gas 24 leaving the scrubber or particle filter 25 is brought into contact with a first gas separation membrane 26. The membrane 26 is selectively gas permeable, meaning that certain gases (in this case, carbon dioxide) are able to penetrate the membrane 26 while other gases (including nitrogen, oxygen and so on) are unable to penetrate the membrane 26. Thus, the waste gas 24 is separated into a first concentrate stream 27 (which is relatively high in carbon dioxide) and a first reject stream 28 (which is relatively low in carbon dioxide). The first concentrate stream 27 is brought into contact with a second gas separation membrane 29, and, once again, certain gases (in this case, carbon dioxide) are able to penetrate the membrane 29 while other gases (including nitrogen, oxygen and so on) are unable to penetrate the membrane 29. Thus, the first concentrate stream 27 is separated into a second concentrate stream 30 (which has a higher carbon dioxide content than the first concentrate stream 27) and a second reject stream 31 (which is relatively low in carbon dioxide).

In the embodiment illustrated in Figure 1, the second concentrate stream 30 represents the final concentrate stream as the carbon dioxide content of the stream has reached the desired level. The second concentrate stream 30 may then be further processed. For instance, the second concentrate stream 30 may be collected as liquid or gaseous carbon dioxide and used in any suitable application. Alternatively, the carbon dioxide may be sequestered in building products, synthetic rock or aggregate or the like in order to prevent the release of the carbon dioxide to the atmosphere.

The first reject stream 28 and the second reject stream 31 (both of which are low in carbon dioxide and high in gases such as nitrogen) may be released to the atmosphere through a flue or stack 32. If desired a portion 33 of the flue gas from the first combustion chamber 10 may also be released to the atmosphere.

A significant advantage of the present invention is that the addition of a second combustion chamber 15 and associated membranes 26, 29 does not require any redesign of an existing power station, and the additional equipment can be added to an existing flowsheet relatively easily.

In the present specification and claims (if any), the word 'comprising' and its derivatives including 'comprises' and 'comprise' include each of the stated integers but does not exclude the inclusion of one or more further integers.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims appropriately interpreted by those skilled in the art.

## Claims

1. A method for the treatment of gas generated by the combustion of coal in a first combustion chamber (10), the method comprising the steps of filtering (12) the gas to remove at least a portion of particulate material present in the gas, transferring the gas to a second combustion chamber (15), combusting the gas in the second combustion chamber in the presence of oxygen and a fuel source to generate waste gas (24) and treating the waste gas (24) to produce a concentrated carbon dioxide stream (30), and wherein at least a portion of the heat (19) generated by combustion of the gas in the second combustion chamber (15) is used to drive one or more electricity generation devices (20),
**characterized in that**
the second combustion chamber comprises one or more turbo generators,
the gas in the second combustion chamber is combusted at an operating temperature of between 1200°C and 2400°C and
the waste gas (24) is treated to produce the concentrated carbon dioxide stream (30) by separating the concentrated carbon dioxide stream (30) from a stream containing nitrogen (31).

2. A method according to claim 1 wherein the waste gas is treated using one or more filters, one or more membrane filters (26), or by cooling to initiate a phase change in components of the waste gas to produce the concentrated carbon dioxide stream (30) thereby separating the concentrated carbon dioxide stream (30) from a stream containing nitrogen (31).

3. A method according to claim 2 wherein the waste gas (24) exiting the second combustion chamber (15) is cooled prior to treatment using the one or more membrane filters (26).

4. A method according to any one of claims 1 to 3 wherein the stream containing nitrogen (31) is released to the atmosphere.

5. A method according to any one of the preceding claims wherein the gas is compressed (13) prior to entering the second combustion chamber (15).

6. A method according to anyone of the preceding claims wherein the fuel source comprises a source of hydrocarbons.

7. A method according to anyone of the preceding claims wherein an operating temperature within the second combustion chamber (15) is higher than an operating temperature within the first combustion chamber (10).

8. A method according to any one of the preceding claims wherein the operating temperature in the second combustion chamber (15) is between 1500°C and 2000°C.

9. A method according to any one of the preceding claims wherein the operating temperature in the second combustion chamber (15) is 1800°C.

10. A method according to any one of the preceding claims wherein at least a portion (23) of the heat (19) generated by combustion of the gas in the second combustion chamber (15) is directed to the first combustion chamber (10).

11. A method according to any one of the preceding claims wherein the concentration of carbon dioxide in the concentrated carbon dioxide stream (30) is greater than 90% v/v.

12. A method according to any one of the preceding claims wherein the concentrated carbon dioxide stream (30) is treated in such a manner that carbon in the concentrated carbon dioxide stream is sequestered and therefore prevented from entering the atmosphere.

13. A method according to any one of the preceding claims wherein at least 99.5% of particular matter is removed during filtration.

14. A method according to claim 6 wherein the source of hydrocarbons comprises coal seam gas, natural gas, shale oil gas, methane, or a combination thereof.

## Patentansprüche

1. Verfahren für die Behandlung von Gas, das durch die Verbrennung von Kohle in einer ersten Brennkammer (10) erzeugt wird, wobei das Verfahren die folgenden Schritte umfasst:
Filtern (12) des Gases zur Entfernung von zumindest einem Teil von Feststoffteilchen, die in dem Gas vorhanden sind,
Übertragen des Gases in eine zweite Brennkammer (15),
Verbrennen des Gases in der zweiten Brennkammer in Anwesenheit von Sauerstoff und einer Brennstoffquelle, wodurch Abgas (24) erzeugt wird, und Behandeln des Abgases (24), wodurch ein konzentrierter Kohlendioxidstrom (30) produziert wird, und
wobei zumindest ein Teil der Wärme (19), die durch die Verbrennung des Gases in der zweiten Brennkammer (15) erzeugt wird, verwendet wird, um eine oder mehrere Elektrizität erzeugende Vorrichtungen (20) anzutreiben,
**dadurch gekennzeichnet, dass**
die zweite Brennkammer einen oder mehrere Turbogeneratoren umfasst,
das Gas in der zweiten Brennkammer bei einer Betriebstemperatur zwischen 1200 °C und 2400 °C verbrannt wird, und
das Abgas (24) durch Trennen des konzentrierten Kohlendioxidstroms (30) von einem stickstoffhaltigen Strom (31) behandelt wird, um den konzentrierten Kohlendioxidstrom (30) zu produzieren.

2. Verfahren nach Anspruch 1, wobei das Abgas behandelt wird unter Verwendung eines oder mehrerer Filter, eines oder mehrerer Membranfilter (26) oder durch Kühlen, um eine Phasenänderung in Bestandteilen des Abgases zu initiieren, um den konzentrierten Kohlendioxidstrom (30) zu produzieren und dadurch den konzentrierten Kohlendioxidstroms (30) von einem stickstoffhaltigen Strom (31) zu trennen.

3. Verfahren nach Anspruch 2, wobei das Abgas (24), das die zweite Brennkammer (15) verlässt, vor der Behandlung unter Verwendung des einen oder der mehreren Membranfilter (26) gekühlt wird.

4. Verfahren nach einem der Ansprüche 1 bis 3, wobei der stickstoffhaltige Strom (31) in die Atmosphäre abgelassen wird.

5. Verfahren nach einem der vorstehenden Ansprüche, wobei das Gas verdichtet wird (13), bevor es in die zweite Brennkammer (15) eintritt.

6. Verfahren nach einem der vorstehenden Ansprüche, wobei die Brennstoffquelle eine Quelle für Kohlenwasserstoffe umfasst.

7. Verfahren nach einem der vorstehenden Ansprüche, wobei eine Betriebstemperatur innerhalb der zweiten Brennkammer (15) höher ist als eine Betriebstemperatur innerhalb der ersten Brennkammer (10).

8. Verfahren nach einem der vorangehenden Ansprüche, wobei die Betriebstemperatur in der zweiten Brennkammer (15) zwischen 1500 °C und 2000 °C beträgt.

9. Verfahren nach einem der vorstehenden Ansprüche, wobei die Betriebstemperatur in der zweiten Brennkammer (15) 1800 °C beträgt.

10. Verfahren nach einem der vorstehenden Ansprüche, wobei zumindest ein Teil (23) der Wärme (19), die durch die Verbrennung des Gases in der zweiten Brennkammer (15) erzeugt wird, in die erste Brennkammer (10) geleitet wird.

11. Verfahren nach einem der vorangehenden Ansprüche, wobei die Konzentration von Kohlendioxid in dem konzentrierten Kohlendioxidstrom (30) höher ist als 90 % Vol./Vol.

12. Verfahren nach einem der vorangehenden Ansprüche, wobei der konzentrierte Kohlendioxidstrom (30) auf solche Weise behandelt wird, dass der Kohlenstoff in dem konzentrierten Kohlendioxidstrom sequestriert wird und daher daran gehindert wird, in die Atmosphäre zu gelangen.

13. Verfahren nach einem der vorstehenden Ansprüche wobei mindestens 99,5 % der Feststoffteilchen während des Filterns entfernt werden.

14. Verfahren nach Anspruch 6, wobei die Quelle für Kohlenwasserstoffe Flözgas, Erdgas, Schiefergas, Methan oder eine Kombination davon umfasst.

## Revendications

1. Procédé pour le traitement d'un gaz généré par la combustion de charbon dans une première chambre de combustion (10), le procédé comprenant les étapes consistant à filtrer (12) le gaz pour éliminer au moins une portion de matière particulaire présente dans le gaz, transférer le gaz vers une seconde chambre de combustion (15), brûler le gaz dans la seconde chambre de combustion en présence d'oxygène et d'une source de combustible pour générer un gaz résiduaire (24) et traiter le gaz résiduaire (24) pour produire un flux de dioxyde de carbone concentré (30), et dans lequel au moins une portion de la chaleur (19) générée par la combustion du gaz dans la seconde chambre de combustion (15) est utilisée pour entraîner un ou plusieurs dispositifs de génération d'électricité (20),
**caractérisé en ce que**
la seconde chambre de combustion comprend un ou plusieurs turbogénérateurs,
le gaz dans la seconde chambre de combustion est brûlé à une température de fonctionnement située entre 1 200 °C et 2 400 °C et
le gaz résiduaire (24) est traité pour produire le flux de dioxyde de carbone concentré (30) en séparant le flux de dioxyde de carbone concentré (30) d'un flux contenant de l'azote (31).

2. Procédé selon la revendication 1, dans lequel le gaz résiduaire est traité à l'aide d'un ou plusieurs filtres, d'un ou plusieurs filtres à membrane (26), ou par refroidissement pour débuter un changement de phase de composants du gaz résiduaire pour produire le flux de dioxyde de carbone concentré (30) séparant ainsi le flux de dioxyde de carbone concentré (30) d'un flux contenant de l'azote (31).

3. Procédé selon la revendication 2, dans lequel le gaz résiduaire (24) sortant de la seconde chambre de combustion (15) est refroidi avant traitement à l'aide des un ou plusieurs filtres à membrane (26).

4. Procédé selon l'une quelconque des revendications 1 à 3, dans lequel le flux contenant de l'azote (31) est relâché dans l'atmosphère.

5. Procédé selon l'une quelconque des revendications précédentes, dans lequel le gaz est comprimé (13) avant d'entrer dans la seconde chambre de combustion (15).

6. Procédé selon l'une quelconque des revendications précédentes, dans lequel la source de combustible comprend une source d'hydrocarbures.

7. Procédé selon l'une quelconque des revendications précédentes, dans lequel une température de fonctionnement au sein de la seconde chambre de combustion (15) est plus élevée qu'une température de fonctionnement au sein de la première chambre de combustion (10).

8. Procédé selon l'une quelconque des revendications précédentes, dans lequel la température de fonctionnement dans la seconde chambre de combustion (15) est située entre 1 500 °C et 2 000 °C.

9. Procédé selon l'une quelconque des revendications précédentes, dans lequel la température de fonctionnement dans la seconde chambre de combustion (15) est de 1 800 °C.

10. Procédé selon l'une quelconque des revendications précédentes, dans lequel au moins une portion (23) de la chaleur (19) générée par une combustion du gaz dans la seconde chambre de combustion (15) est dirigée vers la première chambre de combustion (10).

11. Procédé selon l'une quelconque des revendications précédentes, dans lequel la concentration en dioxyde de carbone dans le flux de dioxyde de carbone concentré (30) est supérieure à 90 % v/v.

12. Procédé selon l'une quelconque des revendications précédentes, dans lequel le flux de dioxyde de carbone concentré (30) est traité de manière à ce que le carbone dans le flux de dioxyde de carbone concentré soit séquestré et par conséquent empêché d'entrer dans l'atmosphère.

13. Procédé selon l'une quelconque des revendications précédentes, dans lequel au moins 99,5 % de matière particulaire sont éliminés durant la filtration.

14. Procédé selon la revendication 6, dans lequel la source d'hydrocarbures comprend du gaz de veine de charbon, du gaz naturel, du gaz d'huile de schiste, du méthane, ou une combinaison de ceux-ci.
